(19) Europäisches Patentamt
European Patent Office
Office européen des brevets

(11) **EP 2 581 340 B1**

(12) **EUROPÄISCHE PATENTSCHRIFT**

(45) Veröffentlichungstag und Bekanntmachung des Hinweises auf die Patenterteilung:
**22.02.2017 Patentblatt 2017/08**

(51) Int Cl.:
*C01B 11/02* *(2006.01)*    *C02F 1/76* *(2006.01)*

(21) Anmeldenummer: **11185154.9**

(22) Anmeldetag: **14.10.2011**

(54) **Verbessertes Verfahren zur Behandlung von Wasser mit Chlordioxid**

Improved method for treating water with chlorine dioxide

Procédé amélioré destiné au traitement d'eau contenant du dioxyde de chlore

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.04.2013 Patentblatt 2013/16**

(73) Patentinhaber: **Evonik Degussa GmbH**
**45128 Essen (DE)**

(72) Erfinder:
• **Grund, Gerda**
**48653 Coesfeld (DE)**
• **Rahtz, Hartmut**
**48249 Dülmen (DE)**
• **Korte, Hermann-Josef**
**45721 Haltern am See (DE)**

(56) Entgegenhaltungen:
WO-A1-2009/077160    DE-A1-102006 060 578
DE-A1-102008 042 424    US-A1- 2005 244 328
US-A1- 2010 155 341

**Beschreibung**

Die Erfindung betrifft ein Verfahren zur Herstellung von Chlordioxid (ClO$_2$) aus Salzsäure (HCl) und Natriumchlorit (NaClO$_2$) in Gegenwart von Wasser (H$_2$O) sowie ein Verfahren zur Behandlung von Wasser mit Chlordioxid, welches aus Salzsäure und Natriumchlorit hergestellt wurde.

Verfahren dieser Gattung sind aus WO2009/077309A1 bekannt.

Chlordioxid (ClO$_2$) ist eine hochgiftige, explosive Chemikalie, welche als Biozid zur Desinfektion von Wasser verwendet wird. Bei letzterem kann es sich um Trink- oder Tränkwasser, Spül- oder Reinigungswasser in der Lebensmittelindustrie oder in der Medizintechnik, um Schwimmbad-Wasser oder um Industriewasse wie beispielsweise Kühlwasser handeln.

Um Mikroorganismen wie Keime, Bakterien, Viren, Pilze oder Algen im Wasser abzutöten, genügt bereits eine geringe Konzentration von etwa 0.2 g Chlordioxid in einem Liter Wasser.

Da Chlordioxid zugleich bleichend wirkt, kann Wasser auch zum Zwecke der Herstellung eines Bleichmittels mit Chlordioxid angereichert werden. Ein solches Bleichmittel lässt sich zum Beispiel zum Bleichen von Zellstoff bei der Papierherstellung verwenden. Die Konzentrationen sind hier anders als bei der Biozidbehandlung.

Auf Grund der Explosionsneigung von gasförmigem Chlordioxid (c > 300 g/m$^3$) und wässrigen Chlordioxidlösungen (c > 26 g/l), kann Chlordioxid nicht in komprimierter Form oder in Lösungen mit höheren Konzentrationen gelagert werden. Vor diesem Hintergrund muss Chlordioxid möglichst am Verwendungsort hergestellt werden. Dies geschieht durch Kontaktieren von reaktiven Grundchemikalien in speziellen Reaktoren von Chlordioxiderzeugungsanlagen. Die Chemikalienvorratsbehälter, die Dosiereinrichtungen sowie der Reaktor der Chlordioxidanlagen bilden eine apparative, örtlich zusammenhängende Einheit, welche in der Regel in personenbegangenen Räumen aufgestellt ist.

Eine allgemeine Einführung in die Chlordoxid-Behandlung von Kühlwasser bietet: Nowosielski, Marek: On-Site Chlorine dioxide: A Review of Uses, Safety and New Processes. Official Proceedings - 65th International Water Conference (2004), Seiten 213-225.

In jüngerer Zeit gibt es Bestrebungen, das Chlordioxid in situ, also unmittelbar in dem zu behandelnden Wasser zu synthetisieren. Dieser Ansatz erlaubt eine größtmögliche Prozesssicherheit. Beispiele hierfür finden sich in der Patentliteratur unter WO2009/077309A1, WO2009/077160A1, DE202004005755U1 und US2005/0244328A1.

Es sind unterschiedliche Synthesewege für Chlordioxid bekannt. Im industriellen Maßstab wird Chlordioxid oft aus Natriumchlorit oder Natriumchlorat unter Verwendung von Salzsäure, Chlor oder von Schwefelsäure/Wasserstoffperoxid dargestellt. Die neusten kommerziellen Verfahren benutzen Natriumchlorit als eines der Ausgangsmaterial ien.

Die grundlegende Chemie der geläufigsten Verfahren zur Darstellung von Chlordioxid ist nachstehend erläutert. Die dabei eingesetzten Stoffe werden als Einsatzchemikalien oder auch als Edukte bezeichnet. Die dabei entstehenden Stoffe werden Produkte genannt. Das Zielprodukt ist dabei stets das Chlordioxid, gleichwohl entstehen aber auch Nebenprodukte.

1. Verfahren mit Natriumchlorit und starker Säure

Im ersten Verfahren wird eine starke Säure zusammen mit Natriumchlorit (NaClO$_2$) eingesetzt. Die starke Säure ist meistens Salzsäure (Chlorwasserstoffsäure, HCl) oder Schwefelsäure (H$_2$SO$_4$). Unter Verwendung von Chlorwasserstoffsäure lautet die Reaktionsstöchiometrie:

$$5\ NaClO_2 + 4\ HCl \rightarrow 4\ ClO_2 + 5\ NaCl + 2\ H_2O \qquad \text{[Gleichung 1]}$$

Außerdem kann Chlordioxid unter Verwendung von Schwefelsäure entsprechend der nachstehenden Reaktion gebildet werden:

$$10\ NaClO_2 + 5\ H_2SO_4 \rightarrow 8\ ClO_2 + 5\ Na_2SO_4 + 2\ HCl + 4\ H_2O \qquad \text{[Gleichung 2]}$$

Nebenprodukte sind in beiden Verfahren Reaktionswasser und das jeweilige Salz der jeweils eingesetzten Säure. Die Edukte werden stets in wässriger Lösung eingesetzt. Die Produkte liegen mithin ebenfalls in wässriger Lösung vor. Das ein- und ausgetragende Lösungswasser und das bei der Reaktion entstehende Reaktionswasser ist nicht das im Sinne der Erfindung zu behandelnde Wasser. Soweit hier von Wasser die Rede ist, ist dies als Sammelbegriff für das zu behandlende Wasser, Lösungswasser, Reaktionswasser und etwaiges Verdünnungswasser zu verstehen.

2. Verfahren ausgehend von Natriumchlorit und Chlor

Dieses Verfahren verwendet gasförmiges Chlor (Cl$_2$) zusammen mit Natriumchlorit. Die Reaktion läuft in zwei Stufen ab, zuerst mit der Bildung von Chlorwasserstoffsäure.

$$Cl_2 + H_2O \rightarrow HOCl + HCl \qquad \text{[Gleichung 3]}$$

Das Zwischenprodukt, Hypochlorsäure (HOCl), reagiert dann mit Natriumchlorit (NaClO$_2$) unter Bildung von Chlordioxid (ClO$_2$).

$$HOCl + HCl + 2\ NaClO_2 \rightarrow 2\ ClO_2 + 2\ NaCl + H_2O \qquad \text{[Gleichung 4]}$$

Die Summenreaktion aus den beiden Gleichungen ergibt:

$$Cl_2 + 2\ NaClO_2 \rightarrow 2\ ClO_2 + 2\ NaCl \qquad \text{[Gleichung 5]}$$

3. Verfahren ausgehend von Natriumchlorit und Natriumhypochlorit

Im dritten Verfahren wird Natriumhypochlorid (NaOCl) zusammen mit Natriumchlorit verwendet:

$$NaOCl + HCl \rightarrow NaCl + HOCl \qquad \text{[Gleichung 6]}$$

$$HCl + HOCl + 2\ NaClO_2 \rightarrow 2\ ClO_2 + 2\ NaCl + H_2O \qquad \text{[Gleichung 7]}$$

Alle diese Synthesereaktionen zur Erzeugung von Chlordioxid werden in der Regel in Reaktoren durchgeführt, die entweder kontinuierlich oder diskontinuierlich (Batch-Verfahren) betrieben werden.

Die vorliegende Erfindung befasst sich ausschließlich mit dem Syntheseweg gemäß Gleichung 1.

Nowosielski erwähnt in seinem oben erwähnten Aufsatz, dass bei der Durchführung des Chlorit-Salzsäureverfahrens ein 250% -iger Überschuss an Salzsäure üblich sei. Da laut Gleichung 1 das stöchiometrische Verhältnis von Natriumchlorit zu Salzsäure 4:5 = 0.8 ist, ergibt sich aus einem 250% igen Salzsäureüberschuss ein molares Verhältnis von Salzsäure zu Natriumchlorit von 250% * 0.8 = 2. Kommerziell erhältliche Reaktoren würden entsprechend Chlordioxid-Ausbeuten von 90% erreichen.

In der Biozidbehandlung von industriellem Kühlwasser hat sich insbesondere das in WO2009/077309A1 beschriebene Natriumchlorit/Salzsäure-Verfahren bewährt. Der dort gelehrte hochkonzentrierte Einsatz der Edukte erlaubt eine effektive Desinfektion des zu behandelnden Wassers. Dank in situ - Synthese ist das Verfahren sehr sicher. Verbesserungsfähig ist dieses Verfahren hinsichtlich seiner Wirtschaftlichkeit: Die Menge der eingesetzten Edukte und die damit erreichte Ausbeute an Chlordioxid bestimmen maßgeblich die Betriebskosten; die Höhe der Invenstitionskosten für die Anlage ergeben sich aus der Baugröße der Komponenten, insbesondere aus der Größe der Chlordioxid-Reaktoren.

In Hinblick auf diesen Stand der Technik liegt der vorliegenden Erfindung die Aufgabe zu Grunde, das bewährte Salzsäure/Chlorit-Verfahren so weiter zu bilden, dass es kostengünstiger zu installieren und durchzuführen ist.

Gelöst wird diese Aufgabe dadurch,

a) dass die Salzsäure in wässriger Lösung mit einer Konzentration von 27 bis 33 Gew% eingesetzt wird;

b) dass das Natriumchlorit in wässriger Lösung mit einer Konzentration von 22 bis 27 Gew% eingesetzt wird;

c) dass das molare Verhältnis von eingesetzter Salzsäure zu eingesetzem Natriumchlorit zwischen 2.14 und 4.2 liegt;

d) und dass die Verweilzeit der Edukte im Reaktor weniger als 6 Sekunden, insbesondere 5 Sekunden beträgt.

Gegenstand der Erfindung ist daher ein Verfahren zur Herstellung von Chlordioxid aus Salzsäure und Natriumchlorit in Gegenwart von Wasser, bei welchem die Salzsäure in wässriger Lösung mit einer Konzentration von 27 bis 33 Gew% eingesetzt wird, bei welchem das Natriumchlorit in wässriger Lösung mit einer Konzentration von 22 bis 27 Gew% eingesetzt wird und bei welchem das molare Verhältnis von eingesetzter Salzsäure zu eingesetzem Natriumchlorit zwischen 2.14 und 4.2 liegt.

Es wurde gefunden, dass das molare Verhältnis von Salzsäure und Natriumchlorit die Ausbeute und die Reaktionsgeschwindigkeit der Chlordioxid-Synthese beeinflusst. Die Lage des Optimums des molaren Verhältnisses ist dabei abhängig von der Konzentration der Edukte.

Laut Gleichung 1 ist das stöchiometrische molare Verhältnis Salzsäure zu Natriumchlorit 4 : 5 = 0.8. Wird die eingesetzte Menge an Säure erhöht, steigt die Ausbeute des Zielproduktes (Chlordioxid). Dieses Verhalten wird beobachtet bis zum Erreichen des Maximums der Ausbeute (100%). Eine weitere Erhöhung der Säuremenge (über eine bestimmte Menge hinaus) führt aber unerwarteter Weise zu einem Absinken der Ausbeute.

Diese Abhängigkeit lässt sich sowohl bei konzentrierter Säure (30%) als auch bei verdünnter Säure (20%) beobachten. Dieser Effekt des Auftretens des Maximums ist unabhängig von eingestellter Verweilzeit zu beobachten.

Die Auswahl der besonderen Betriebsparameter beruht mithin auf der an sich überraschenden Erkenntnis, dass die Ausbeute an Chlordioxid mit Erhöhung der Konzentrations der Edukte und gleichzeitigem Überschuss an Salzsäure nicht dauerhaft steigt, sondern dass es für beide Verfahrensparameter ein relativ niedrig liegendes Optimum existiert - viel hilft in diesem Fall nicht viel. Aufgrund dieser Erkenntnis ist es möglich, das Verfahren mit einem vergleichsweise geringen Edukteinsatz zu fahren und dennoch eine hohe Ausbeute an Chlordioxid zu erreichen und damit die Desinfektionsaufgabe zu erfüllen. Die Betriebskosten fallen dadurch. Die beanspruchten Bereiche führen zu Ausbeuten größer 93%, über weite Bereiche werden sogar vollständige Umsätze erreicht.

Darüber hinaus überrascht, dass die Reaktion im erfindungsgemäßen Betriebsbereich mit bisher unerkannt hoher Geschwindigkeit abläuft - dieses Wissen gestattet eine Durchführung der Reaktion bei deutlich kürzeren Verweilzeiten und damit in kleineren Reaktoren:

Die Verweilzeit t ist bei kontinuierlich durchgeführten Reaktionen nämlich definiert als das Verhältnis von Reaktorvolumen V zu Volumenstrom V' durch den Reaktor:

$$t = V / V' \hspace{4cm} \text{[Gleichung 8]}$$

Wenn die Reaktion nunmehr schneller abläuft, kann bei gleich bleibendem Durchsatz V' somit das Reaktorvolumen V verkleinert werden. Kleinere Reaktoren sind preisgünstiger. Mithin senkt das erfindungsgemäße Fahren der Chlordioxid-Synthese dank ihrer hohen zeitspezifischer Erzeugungsleistung nicht nur die Betriebs-, sondern auch die Investitionskosten der Chlordioxidanlage.

Die Synthese von Chlordioxid aus konzentrierten Einsatzchemikalien führt beim stöchimetrischen Überschuss an Säure zur Steigerung der Reaktionsgeschwindigkeit. Die Geschwindigkeit kann im hier gefundenen Bereich des molaren Verhältnisses derart gesteigert werden, dass die für die Erreichung der maximalen Ausbeute notwendige Verweilzeit auf Werte unter 6 Sekunden fällt.

Bevorzugt wird die Salzsäure in wässriger Lösung mit einer Konzentration von 30 Gew% eingesetzt. Die optimale Konzentration des Natriumchlorits in Wasser beträgt 25 Gew%.

Das optimale molare Verhältnis von eingesetzter Salzsäure zu eingesetzem Natriumchlorit liegt bei vorgenannten optimalen Eduktkonzentrationen zwischen 2.19 und 3.6. Das Umsatz- und Geschwindigkeitsmaximum und damit die größtmögliche Prozessintensivierung wird bei einem molaren $HCl:NaClO_2$ -Verhältnis von etwa 3 erreicht. In Hinblick auf den verfahrenstechnischen Toleranz- bzw. Regelungsbereich von sollte daher der Prozess mit einem molaren Verhältnis von eingesetzter Salzsäure zu eingesetzem Natriumchlorit zwischen 2.4 und 3.4 gefahren werden. Dieser Bereich ist daher besonders bevorzugt.

Bevorzugt wird das erfindungsgemäße Verfahren durchgeführt in einem Reaktor, welcher von Wasser umgeben ist. Ein in Wasser eingetauchter Reaktor erhöht die Sicherheit des Verfahrens: Da die beiden Edukte erst im Reaktor miteinander in Kontakt kommen, entsteht das gefährliche Chlordioxid erst im eingetauchten Reaktor und damit unter Wasser. Im Havariefall verdünnt das den Reaktor umgebene Wasser das Chlordioxid schlagartig, sodass die Gefährdung der Umwelt eingeschränkt ist.

In einer bevorzugten Weiterbildung der Erfindung wird das aus dem Reaktor austretende, in wässriger Lösung vorliegende Chlordioxid mit Wasser verdünnt und sodann mit dem den Reaktor umgebenden Wasser vermischt. Diese Vorgehensweise gestattet eine kontrollierte Einstellung der Konzentration des Chlordioxids in dem zu behandelden Wasser mit Hilfe von Verdünnungswasser, welche das Chlordioxid in das letztendlich zu behandelnde Wasser spült.

Die Chlordioxidkonzentration sollte bei Austritt aus dem Reaktor zwischen größer 3 g/l Lösung bevorzugt größer 26 g/l Lösung und besonders bevorzugt größer 80 g/l Lösung betragen. Die Überschreitung der Explosionsgrenze von 26g/l ist nur dann möglich, wenn das aus dem Reaktor austretende wässrige Chlordioxid sofort mit dem Verdünnungswasser verdünnt wird bzw. der Reaktor im Wasser abgetaucht ist. Die hohe Konzentration des Chlordioxids ist der hohen Prozessintensivierung geschuldet.

Das erfindungsgemäß erzeugte Chlordioxid wird bevorzugt zur Desinfektion bzw. Biozidbehandlung von Wasser jedweder Art verwendet. Gegenstand der Erfindung ist mithin auch ein Verfahren zur Behandlung von Wasser mit Chlordioxid umfassend die folgenden Schritte:

a) Bereitstellen von zu behandelndem Wasser;

b) Bereitstellen eines Reaktors;

c) Eintauchen des Reaktors in das zu behandelnde Wasser;

d) Bereitstellen von Salzsäure in wässriger Lösung außerhalb des zu behandelnden Wassers;

e) Bereitstellen von Natriumchlorit in wässriger Lösung außerhalb des zu behandelnden Wassers;

f) Fördern der wässrigen Salzsäure und des wässrigen Natriumchlorits in den Reaktor;

g) Reagieren der wässrigen Salzsäure und des wässrigen Natriumchlorits in dem Reaktor zu Chlordioxid in wässriger Lösung;

h) Vermischen des wässrigen Chlordioxids mit dem zu behandelnden Wasser;

i) bei welchem die Salzsäure in wässriger Lösung mit einer Konzentration von 27 bis 33 Gew% bereitgestellt wird;

k) bei welchem das Natriumchlorit in wässriger Lösung mit einer Konzentration von 22 bis 27 Gew% bereitgestellt wird;

l) bei welchem das molare Verhältnis von eingesetzter Salzsäure zu eingesetzem Natriumchlorit zwischen 2.14 und 4.2 liegt;

m) und bei welchem die Verweilzeit der Edukte im Reaktor weniger als 6 Sekunden, insbesondere 5 Sekunden beträgt.

Die Lagerung der Einsatzchemikalien Salzsäure und Natriumchlorit in getrennten Behältern außerhalb des Wassers ist vergleichsweise unbedenklich und gut beherrschbar.

Die optimalen Verfahrensparameter wurden bereits oben beschrieben.

Eine Anlage zur Durchführung des erfindungsgemäßen Verfahrens schließt typischerweise zwei getrennte Tanks für die Einsatzchemikalien ein, einen für das Natriumchlorit und einen für die Salzsäure. Apparaturen sind vorgesehen, welche die Edukte in die jeweilgen Lagertanks einspeisen als auch Lösungen entnehmen können. Die Edukte müssen nicht in der erfindungsgemäß verwendeten Konzentration in die Tanks eingefüllt werden. Ggf. wird die geforderte Konzentration erst im Tank eingestellt, etwa durch Zugabe von Verdünnungswasser.

Vorzugsweise schließen diese Apparaturen Pumpen und Zuleitungen ein, die ausreichen, um die Volumenströme der Einsatzchemikalien zu gewährleisten. Fachleute auf dem Gebiet können leicht geeignete Größen für die betreffenden Lagertanks, Zuleitungen und Pumpen bestimmen, um die erforderlichen Einspeisungsraten von Eduktösungen zu bewerkstelligen. Besondere Bedeutung haben die Pumpen für die Edukte, da über diese das gewünschte molare Verhältnis der Edukte eingestellt wird. Dies wird in der Praxis über die Drehzahlen der Pumpen erfolgen. Manche Pumpenbauarten erlauben auch eine Einstellung des geförderten Volumenstroms bei konstanter Drehzahl etwa durch Verstellung des Schluckvolumens oder dergleichen. Dies ist aber komplizierter. Das Schluckvolumen einer Pumpe ist das geförderte Volumen pro Umdrehung des Antriebs, bei einer Kolbenpumpe entspricht dies dem im Motorenbau verwendeten Begriff Hubraum.

Die Vorrichtung umfasst des Weiteren eine Apparatur zum in Kontakt bringen der Lösung der Einsatzchemikalien. Diese Apparatur wird als Reaktor bezeichnet. Es kann jede Apparatur, die die vorgenannten Lösungen ausreichend mischt, verwendet werden, einschließlich herkömmlicher T-Stücke oder anderer Verbindungselemente, die zwei Ströme, bzw. drei Ströme zu einem vereinen, Drosselleitungen und/oder eines Rührgefäßes. Die wässrige Reaktionslösung kann dann nach dem Mischen in den Reaktionsraum eingespeist werden. Bevorzug erfolgt das Kontaktieren der beiden Edukte im Reaktionsraum. Der Mischvorgang kann durch jede Einrichtung eingeleitet werden, wie z. B. Prallbleche, Injektoren oder Füllkörper, welche ein optimales Mischen gewährleistet.

Als Reaktionsraum kann jeglicher Reaktor, der zur Auslösung der Reaktion zwischen den Einsatzchemikalien insbesondere der wässrigen Säurelösung und dem Alkalimetallsalz eines Chloritions, in der Lage ist, eingesetzt werden, einschließlich kontinuierlicher Rührreaktoren, einfacher Tanks, Massen- bzw. Pfropfenflussreaktoren und Rohrreaktoren. Ein Rohrreaktor ist besonders bevorzugt, da dieser eine kontinuierliche Reaktionsführung in einem stationären Zustand erlaubt. Normalerweise besteht eine Chlordioxiderzeugungseinheit nur aus einem Rohrreaktor, jedoch kann die Erzeugungsleistung einer Einheit durch die parallele Anordnung mehrer Reaktoren, zum Beispiel zu einem Rohrbündel, erhöht werden. Der Reaktor kann sowohl temperaturgeregelt sein, als auch aus einem gut wärmeleitenden Material bestehen, um freiwerdende Reaktionswärme an das umgebende Wasser ab zu geben. Der Werkstoff, aus dem der Reaktor gefertigt wird, besteht aus Materialien, die gegen die jeweiligen Reaktionslösungen eine gute Beständigkeit aufweisen. Bei der Erzeugung von Chlordioxidlösungen mit Konzentrationen von größer 28 g/l wird als Reaktormaterial beispielsweise Titan, Alloy 31, Glas oder Chemiewerkstoffe z.B. Polymere wie z.B. PVDF oder PTFE verwendet. Das $ClO_2$ wird aus dem Reaktor durch einen beliebigen Mechanismus abgeführt, der zur Abführung einer wässrigen Lösung aus einem Reaktor in der Lage ist. Vorzugsweise wird die Reaktion kontinuierlich ausgeführt, und $ClO_2$ wird kontinuierlich aus dem Reaktor abgeführt. Nach dem Verlassen des Reaktors wird das $ClO_2$ direkt in das zu behandelnde Wasser dosiert, oder über eine am Reaktorauslass befindliche Ableitung an einen oder mehrere andere Ort transportiert.

Ein Rohrreaktor kommt bevorzugt gemäß der vorliegenden Erfindung zum Einsatz. Allgemein ist das Rohr des Rohrreaktors so konstruiert, dass es eine ausreichende Länge hat, um für die vorgesehene Verweildauer in dem Reaktor zu sorgen, um die Bestandteile angesichts der Strömungsrate der Reaktionslösung, ihrer Konzentration an Reaktanten und der Temperatur der Reaktionslösung bestmöglich umzusetzen. Ein besonders bevorzugter Reaktor, der zur Herstellung eines geeigneten Generators von wässrigem Chlordioxid vor Ort eingesetzt werden kann, ist ein (temperaturgeregelter) Rohrreaktor, der eine oder mehrere Rohrschlangen enthält. Fachleute auf dem Gebiet sind in der Lage, die Größe und Gestalt des Reaktors in Abhängigkeit von der Menge des herzustellenden wässrigen Chlordioxids, der Strömungsrate und Konzentration der Reaktanten, dem pH-Wert der wässrigen Reaktionslösung, dem pH-Wert des $ClO_2$ und der Temperatur des Reaktors zu variieren. Fachleute auf dem Gebiet sind ebenfalls in der Lage, die Temperatur des Reaktors entsprechend zu modifizieren.

Die Einstellung des molaren Verhältnisses R der Salzsäure zu dem eingesetztem Natriumchlorit erfolgt bei gegebener fester Konzentrationen der Edukt-Lösungen über die Volumenströme $V_{HCl}$ und $V_{NaClO2}$ der Edukte:

$$R = V_{HCl} / V_{NaClO2} * \rho_{HCl} / \rho_{NaClO2} * M_{NaClO2} / M_{HCl} {}^* C_{HCl} / C_{NaClO2} \quad [\text{Gleichung 9}]$$

Dabei bedeuten:

| | |
|---|---|
| R | molares Verhältnis Salzsäure zu Natriumchlorit |
| $V_{HCl}$ | Volumenstrom der wässrigen Salzsäurelösung |
| $V_{NaClO2}$ | Volumenstrom der wässrigen Natriumchloritlösung |
| $\rho_{HCl}$ | Dichte der wässrigen Salzsäurelösung |
| $\rho_{NaClO2}$ | Dichte der wässrigen Natriumchloritlösung |
| $C_{HCl}$ | Konzentration der wässrigen Salzsäurelösung in Gewichts-% |
| $C_{NaClO2}$ | Konzentration der wässrigen Natriumchloritlösung in Gewichts-% |
| $M_{HCl}$ | molare Masse der Salzsäure |
| $M_{NaClO2}$ | molare Masse des Natriumchlorits |

Die Dichten sind temperatur- und konzentrationsabhängig. Bei 20°C gilt für 30% HCl und 25 % $NaClO_2$:

$$\rho_{HCl} = 1.15 \text{ g/cm}^3 \qquad \rho_{NaClO2} = 1.2 \text{ g/cm}^3$$

Die Konzentrationen werden durch die Auswahl der Einsatzedukte bestimmt.

Für 30-% ige Salzsäurelösung gilt: $C_{HCl}$ = 0.3 g HCl / 1 g Lösung

Für 25-% ige Natriumchloritlösung gilt: $C_{NaClO2}$ = 0.25 g $NaClO_2$ /1 g Lösung

Die molaren Massen sind Naturkonstanten:

$$M_{HCl} = 39.4556 \text{ g/mol} \qquad M_{NaClO2} = 90.4415 \text{ g/mol}$$

Unter Verwendung einer 30-%igen Salzsäure- und einer 25-%igen Natriumchloritlösung folgt somit aus Gleichung 9 bei Umgebungstemperatur näherungsweise:

$$R = 2.64^* V_{HCl} / V_{NaClO2} \quad [\text{Gleichung 10}]$$

Die Verweilzeit t ergibt sich bei fest gelegtem Reaktorvolumen V laut Gleichung 8 ebenfalls aus den Eduktströ-

men:

$$t = V / ( V_{HCl} + V_{NaClO2} ) \qquad \text{[Gleichung 11]}$$

Durch Einstellung der Eduktvolumenströme $V_{HCl}$ und $V_{NaClO2}$ lässt sich somit bei geeignet dimensioniertem Reaktorvolumen V sowohl das molare Verhältnis R der Salzsäure zum Natriumchlorit als auch die Verweilzeit t regeln. Die Einstellung der Eduktvolumenströme $V_{HCl}$ und $V_{NaClO2}$ erfolgt bevorzugt elektrisch über die jeweilige Drehzahl der Dosierpumpen.

Auffällig ist, dass der in Gleichung 10 niedergelegte Faktor 2.64 ziemlich genau im optimalen Bereich des molaren Verhältnisses R liegt. Wenn die Volumenströme der Edukte mithin gleichgesetzt werden ($V_{HCl}$ / $V_{NaClO2}$ = 1), wird bereits ein optimaler Betriebspunkt angefahren, sofern die übrigen in Gleichung 10 eingegangenen Vorraussetzungen (Konzentrationen, Dichten) erfüllt sind. Gleiche Volumenströme lassen sich technisch sehr einfach realisieren, indem identische Pumpen verwendet werden (gleiches Schluckvolumen), die mit derselben Welle bei derselben Drehzahl angetrieben werden. Der apparative Aufbau der Anlage und ihre Regelung werden dadurch signifikant einfacher und damit bedeutend kostengünstiger. Vorraussetzung ist dann einzig die Verwendung von 30%iger Salzsäure und 25%igem Natriumchlorit bei 20°C, was aber der üblichen Umgebungstemperatur enspricht. Eine solche Anlage mit gekoppelter Eduktstrom-Regelung lässt sich hinsichtlich ihres Eduktverbrauchs gewiss nicht so effizient fahren wie eine Anlage mit individueller Eduktstrom-Regelung, ist aber in der Investition deutlich günstiger und kann daher in bestimmten Einsatzfällen dennoch wirtschaftlicher sein.

Die Vorrichtung umfasst einen Natriumchloritlagertank, einen Salzsäurelagertank, zwei Pumpen zum Fördern von Salzsäure in wässriger Lösung mit einem ersten Volumenstrom bzw. von Natriumchlorit in wässriger Lösung mit einem zweiten Volumenstrom aus den jeweiligen Tanks in einen Reaktor, wobei die Vorrichtung Mittel aufweist, welche den ersten Volumenstrom und den zweiten Volumenstrom gleichsetzen. Eine solche Vorrichtung ist geeignet zur Durchführung des erfindungsgemäßen Verfahrens bei einem molaren Verhältnis von R= 2.64.

Besagte Mittel sind einfachstenfalls ein gemeinsamer Antrieb für beide Pumpen über eine gemeinsame Welle bei derselben Drehzahl, wobei das Schluckvolumen beider Pumpen gleich gewählt ist. Dieser rein mechanische Aufbau führt zu identischen Volumenströmen aus beiden Pumpen.

Vorzugsweise wird in der den Reaktionsraum verlassenden Lösung, vor dessen Abgabe an das zu behandelnde Wasser, der Leitfähigkeitswert gemessen. Beispielsweise kann ein induktives oder optisches Messverfahren verwendet werden. Aus den gemessenen Leitfähigkeitswerten können Informationen bezüglich der chemischen Umsetzung der verwendeten Reaktanten als auch gegebenenfalls auf die Menge der verwendeten Verdünnungswassermenge erhalten werden.

Die Verdünnung der den Reaktorauslass, oder der Ableitung, verlassenden Chlordioxidlösung erfolgt so, dass die Erneuerungsrate des zu behandelnden Wassers an Reaktorauslass etwa 0,1 m$^3$/h bis 20 m$^3$/h pro Gramm und Stunde erzeugtem Chlordioxid beträgt, vorzugsweise 1 m$^3$/h bis 4 m$^3$/h pro Gramm und Stunde erzeugtem Chlordioxid.

Die Erfindung soll nun anhand von Ausführungsbeispielen näher erläutert werden. Hierfür zeigen:

Figur 1: schematischer Aufbau einer Anlage zur Durchführung des erfindungsgemäßen Verfahrens mit einem in ein Bassin eingetauchten Reaktor;

Figur 2: schematischer Aufbau einer Anlage zur Durchführung des erfindungsgemäßen Verfahrens mit einem in eine Rohrleitung eingesetzten Reaktor;

Figur 3: Löslichkeitsgrenzen Chlordioxid in Wasser;

Figur 4: Ausbeute Chlordioxid in Abhängigkeit des molaren Verhältnisses von Salzsäure zu Natriumchlorit.

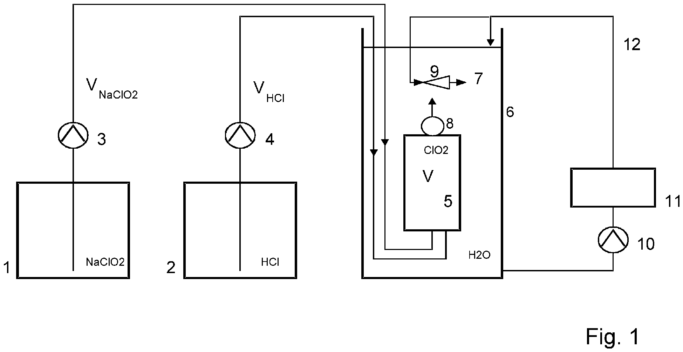

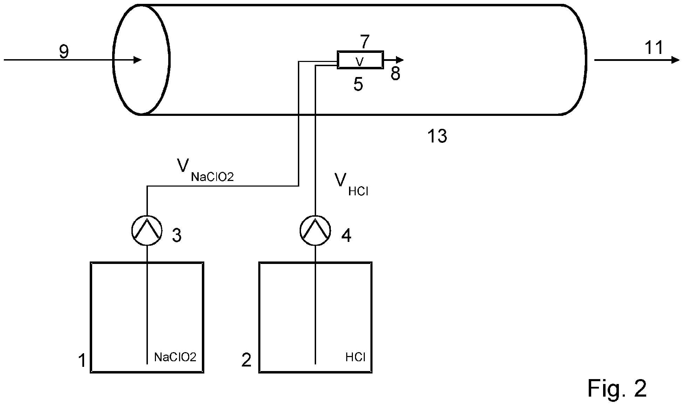

Das erfindungsgemäße Verfahren kann beispielsweise mittels der in den Figur 1 und Figur 2 dargestellten Vorrichtungen durchgeführt werden.

In der Figur 1 ist ein prinzipieller Aufbau zur Durchführung des erfindungsgemäßen Verfahrens in im Wesentlichen stehendem Wasser dargestellt. Die Vorrichtung zur Behandlung von Wasser mit Chlordioxid umfasst zwei Tanks 1, 2 für die Einsatzchemikalien (Edukte), einem Natriumchloritlagertank 1 mit Förderpumpe 3 und einem Salzsäurelagertank 2 mit Förderpumpe 4. Über die Verstellung der Drehzahlen der beiden Förderpumpen 3, 4 können die Volumenströme $V_{HCL}$ und $V_{NaClO2}$ eingestellt werden. Die Pumpen 3, 4 sind über Einzelleitungen mit einem Edukteinlass an der Unterseite eines Reaktors 5 verbunden. Im Reaktor befinden sich Einrichtungen nach dem Stand der Technik, die ein schnelles, vollständiges Vermischen der zugeführten Komponenten im Reaktionsraum gewährleisten. Das freie Volumen V im Reaktor 5 steht als Reaktionsraum zur Verfügung. Durch Variation der Konzentrationsgehalte der Reaktanten-Lösungen oder etwaig verwendeten Verdünnungswassermenge kann die Konzentration der entstehenden Chlordioxid-Lösung auf größer 3 g/l, bevorzugt größer 26 g/l und besonders bevorzugt auf größer 80 g/l eingestellt werden. Die Verweildauer t der Edukte im Reaktorvolumen und das molare Verhältnis R von Salzsäure zu Natriumchlorit wird über die Volumenströme $V_{HCL}$ und $V_{NaClO2}$ gesteuert.

Der Reaktor 5 ist vollständig in ein mit Wasser gefülltes Bassin 6 eingetaucht, um im Havariefall eine sofortige Verdünnung des erzeugten Chlordioxids zu gewährleisten. Das Wasser im Bassin ist in diesem Fall das zu behandelnde Wasser 7.

Am oberen, entgegengesetzten Ende des Reaktors 5 befindet sich der Reaktorauslass 8, dem eine Leitfähigkeitsmessung zugeordnet ist.

Am Übergang der Chlordioxidlösung in das zu behandelnde Wasser 7 kann eine Wasserstrahl-Flüssigkeitspumpe 9 angeordnet sein, wodurch die Erneuerungsrate des zu behandelnden Wassers am Chlordioxideintritt erhöhen werden kann. Die Zuleitung vom Reaktorauslass 8 zur Wasserstrahl-Flüssigkeitspumpe 9 verfügt in diesem Fall über eine Entlastungsbohrung, wodurch sichergestellt wird, dass der Druck des zu behandelnden Wassers 7 im Reaktor 5 wirksam wird.

Der Reaktor ist vollständig von dem zu behandelnden Wasser 7, welches in dem Bassin 6 steht, umgeben. Das behandelte Wasser wird über eine Saugleitung aus dem Bassin 6 entnommen und mit einer Umwälzpumpe 10 dem Verwendungsort 11 zugeführt. Bei dem Bassin 6 kann es sich zum Beispiel um die Kühltasse eines Kühlturms handeln. Der Verwendungsort 11 ist dann ein mit behandelndem Wasser gekühlter Wärmetauscher. Das Bassin 6 kann aber auch ein Trinkwasserbecken darstellen, Einsatzort 11 ist dann etwa eine Produktionseinheit in der Medizintechnik oder Lebensmittelindustrie.

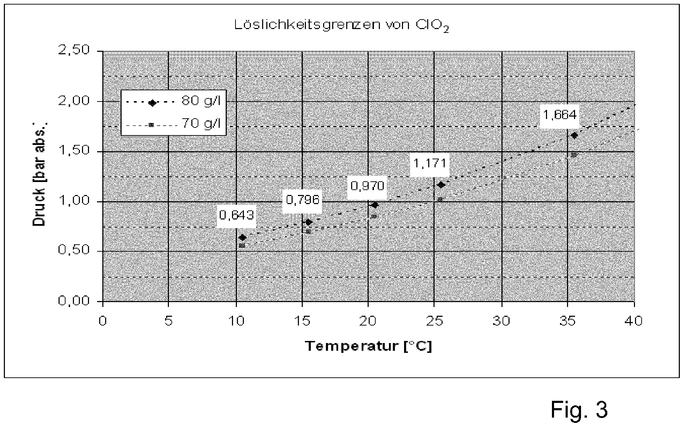

Über eine Rückführleitung 12 wird das dann wiederum zu behandelnde Wasser 7 in das Bassin 6 zurückgeführt und passiert erneut den Reaktorauslass 8 oder wird in die Wasserstrahl-Flüssigkeitspumpe 9 eingespeist. Der Reaktorauslass 8 kann auch in örtliche Nähe zur Saugseite der Umwälzpumpe 10 platziert werden, um einen schnellen Austausch des zu behandelnden Wassers 7 an Reaktorauslass 8 sicher zu stellen. Durch geeignete Wahl der Parameter "Eintauchtiefe Reaktor im zu behandelnden Wasser" (Druck) und "Konzentration der im Reaktor erzeugten Chlordioxidlösung", unter Berücksichtigung der Temperatur des zu behandelnden Wasser, wie in Fig. 3 beispielhaft dargestellt, kann die Bildung einer Chlordioxid-Gasphase unterbunden werden. Weiterhin besteht die Möglichkeit, die aus dem Reaktor 5 austretende Chlordioxidlösung über eine am Reaktorauslass 8 befindliche Ableitung (in der Fig. 1 nicht dargestellt) an einen oder mehrere andere Ort zu transportieren. Dort können auch Aggregate zur Verteilung der Chlordioxidlösung, z.B. Wasserstrahl-Flüssigkeitspumpe, Umwälzpumpe, platziert sein.

Eine zweite Vorrichtung für das erfindungsgemäße Verfahren ist in der Fig. 2 wiedergegeben. Hierbei ist es wesentlich, dass sich der Reaktor 5 innerhalb einer Rohrleitung 13 befindet, wobei die Rohrleitung von zu behandelndem Wasser 7 durchströmt und der Reaktionsraum V von zu behandelndem Wasser umströmt wird. Das zu behandelnde Wasser steht also nicht, sondern strömt. (Selbstverständlich kann es im Bassin 6 auch zu Strömungen kommen, insbesondere durch die Umlaufpumpe 10 oder die Wasserstrahl-Pumpe 9 hervorgerufen, jedoch ist das strömende Volumen im Vergleich zum Gesamtvolumen des Bassins gering, sodass dort von einem stehenden Wasser die Rede ist.)

In der Fig. 2 ist der Reaktor 5 identisch wie in Fig. 1 mit den gleichen Zuleitungen verbunden. Der Reaktor 5 ist ebenfalls von zu behandelndem Wasser 7 umgeben, jedoch befindet sich der Reaktor 5 in einer von zu behandelndem Wasser 7 durchströmten Rohrleitung 13, welche das zu behandelnde Wasser 7 nach Passieren des Reaktorauslasses 8 dem Verwendungsort 11 zuführt.

Das molare Verhältnis R der Reaktanten und die Verweildauer t bestimmen ebenfalls die an den Pumpen 3,4 eingestellten Volumenströme.

Detailliertere Beschreibungen von geeigneten Apparaten zur Durchführung des erfindungsgemäßen Verfahrens werden sich finden in DE102010027840 für ein stehendes Wasser und in DE102010027908 für ein durch eine Rohrleitung fließendes Wasser.

Die Konzentration der entstehenden Lösung am Reaktorauslass 8 auf größer 9 g/l, [ohne Verdünnungswasser steigt der $ClO_2$-Gehalt, auch bei Verwendung von 3,5 %igen Reaktanten, auf 9,1 g/l an] bevorzugt größer 26 g/l und besonders bevorzugt auf größer 80 g/l Chlordioxid, pro Liter ansteigen. Bei dieser bevorzugten Variante ist es vorteilhaft, das Reaktorvolumen zu minimieren. In der Regel sind keine weiteren Einrichtungen zur Erhöhung der Erneuerungsrate des zu behandelnden Wassers 9 am Reaktorauslass 8 notwendig, um die Konzentration der Chlordioxidlösung, nach dem Eintritt in das zu behandelnde Wasser 7, schnell von vorzugsweise größer 80 g pro Liter in den Milligrammbereich zu verschieben. Ebenfalls ist es in der Regel nicht schwierig, den Druck des zu behandelnden Wasser 7 in der Rohrleitung 13 so ein zu stellen, dass die Löslichkeitsgrenze des Chlordioxids in der wässrigen Lösung im Reaktor 7, wie in Fig. 3 dargestellt, nicht überschritten wird.

In der Figur 3 sind die Löslichkeitsgrenzen von Chlordioxid in einer wässrigen Lösung in Abhängigkeit von Druck und Temperatur, beispielhaft für die Chlordioxidkonzentrationen 70 g/l und 80 g/l dargestellt.

Reaktionsbeispiele

Zum Beleg des erfindungsgemäßen Effekts wurden im laufenden Betrieb einer bestehenden Chlordioxid-Erzeugungsanlage bei zwei unterschiedlichen Reaktionsvolumina das molare Verhältnis der Edukte, die Konzentration der Edukte sowie die Verweildauer variiert und der dabei erzielte Chlordioxidumsatz ermittelt. Das Reaktionsvolumen wurde dabei durch Einfüllen von Glaskugeln in den Reaktor künstlich verkleinert. Die Konzentration der Edukte wurde durch Zugabe von Wasser in den Edukttank variiert. Die Verweilzeit und das molare Verhältnis wurden über den Volumenstrom der Eduktpumpen eingestellt.

Beispiel 1

Verwendet wird die in Fig. 1 gezeigte Vorrichtung. Die Lösung im Chloritlagertank 1 enthält eine 25%ige wässrige Natriumchlorit-Lösung und mit der Förderpumpe 3 werden zu variierende Mengen dieser Lösung in den Reaktor 5 gefahren. Aus dem Säurelagertank 2 werden ebenfalls zu variierende Mengen einer 30%-igen wässrigen Salzsäure-Lösung mit der Förderpumpe 4 zeitgleich dem Reaktor 5 zugeführt. Die Edukttemperatur betrug 20°C. Der Reaktor verfügt nach Einfüllen von Glaskugeln über ein freies Volumen V von 13 Milliliter und die Verweilzeit des Reaktionsgemisches im Reaktionsraum wird durch den gewählten Durchsatz der Edukte so eingestellt, dass sich immer eine Verweilzeit t von 5 oder etwas weniger als 5 Sekunden einstellt [Gleichung 11].

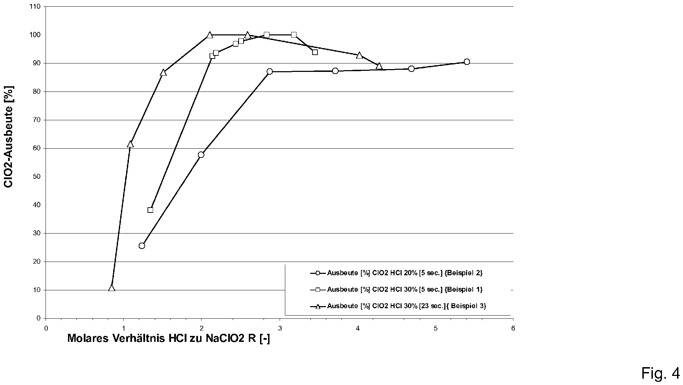

Die entstandene Chlordioxid-Lösung wird über den Reaktorauslass 8 mit dem zu behandelnden Wasser 7 in der Wasserstrahl-Flüssigkeitspumpe 9 kontinuierlich vermischt und dem Desinfektionsprozess zur Verfügung gestellt. Nach Einstellung des stationären Zustandes wurden am Ausgang der Wasserstrahlpumpe Proben gezogen in denen der $ClO_2$ - Gehalt photometrisch durch Messung der Extinktion (bei 345 nm) bestimmt wurde und die Ausbeute berechnet wurde. Es wurden unterschiedliche Durchsätze an HCl und $NaClO_2$ eingestellt, um das molare Verhältnis R der Einsatzstoffe von 1.35 :1 bis 3.46 : 1 zu variieren. Die Messergebnisse sind in Tabelle 1 wiedergegeben und mit dem Messpunktsymbol □ in dem Diagramm der Figur 4 aufgetragen.

Zwischen R = 2.84 und 3.19 wird sogar ein vollständiger Umsatz erzielt, also das Verfahren erreicht den größten Optimierungsgrad.

Tabelle 1: HCl 30% ; $NaClO_2$ 25 %; t=5s; V= 13ml

| R | Ausbeute |
|---|---|
| [-] | [%] |
| 1.35 | 38.1 |
| 2.14 | 92.5 |
| 2.19 | 93.5 |
| 2.44 | 96.8 |
| 2.51 | 97.7 |
| 2.84 | 100.0 |
| 3.19 | 100.0 |
| 3.46 | 93.8 |

Anschließend wurde diese wässrige $ClO_2$-Lösung mit der rückgeführten Menge des zu behandelnden Wassers im Bassin 6 zusätzlich abgemischt. Der Durchsatz des mit Chlordioxid angereicherten Wassers beträgt ca. 1000 m³ pro Stunde und wird mittels der Umwälzpumpe 10 aus dem Bassin 6 entnommen und dem Verwendungsort 11 zur Verfügung gestellt. Über die Rückführung des zu behandelndes Wassers 7 gelangt das an Chlordioxid verarmte Wasser in den Bassin zurück. Der Reaktorauslass 8 ist im Bassin 4 Meter unter die Wasseroberfläche abgesenkt und die Temperatur des zu behandelnden Wassers beträgt bis 32 °C.

Bei der beschriebenen Vorrichtungen handelt es sich um Rückkühlwasser 7 einer Umlaufkühlung, welches sich in einer Kühlturmtasse (Bassin 6) befindet. Mit der Kreislaufpumpe 10 wird das Kühlwasser über Wärmetauschflächen einer chemischen Produktionsanlage mit exothermen Wärmequellen geleitet (Verwendungsort 11 des zu behandelten Wassers) und anschließend über die Einbauten eines Verdunstungskühlturmes verrieselt, bevor es wieder die Kühlturmtasse (Bassin 6) erreicht. Die Kühlturmtasse verfügt über ein Volumen von 800 m³. Der Wasserstand im Zwischenspeicher ist standgeregelt, so dass das verdunstete Kühlwasser automatisch durch Frischwasser ersetzt wird.

Beispiel 2

In derselben Anlage wurde der verkleinerte Reaktor mit 13 ml Volumen mit nunmehr nur 20%-iger Salzsäure und 25%-iger Natriumchloritlösung beaufschlagt. Durch Variation der Eduktströme wurde das molare Verhältnis der Salzsäure zum Natriumchlorit von 1.24 :1 bis 5.41 : 1 variiert. Die Verweilzeit wurde jeweils auf etwa 5 Sekunden eingerichtet. Die Messergebnisse sind in Tabelle 2 wiedergegeben und mit dem Messpunktsymbol ○ in dem Diagramm der Figur 4 aufgetragen.

Tabelle 2: HCl 20% ; $NaClO_2$ 25 %; t=5s; V= 13ml

| R | Ausbeute |
|---|---|
| [-] | [%] |
| 1.24 | 25.5 |
| 2 | 57.6 |
| 2.88 | 86.9 |
| 3.72 | 87.1 |
| 4.7 | 88.0 |
| 5.41 | 90.3 |

Beispiel 3

Bei derselben Anlage wurden nun die Glaskugeln aus dem Reaktor entnommen. Der Reaktor mit numher 26.67 ml unverkleinertem Volumen V wurde mit wieder 30%-iger Salzsäure und 25%-iger Natriumchloritlösung beaufschlagt. Durch Variation der Eduktströme wurde das molare Verhältnis der Salzsäure zum Natriumchlorit von 0.85 : 1 bis 4.28 : 1 variiert. Die Verweilzeit wurde jeweils auf etwa 23 Sekunden eingerichtet. Die Messergebnisse sind in Tabelle 3 wiedergegeben und mit dem Messpunktsymbol Δ in dem Diagramm der Figur 4 aufgetragen.
Ein vollständiger Umsatz wird zwischen R = 2.11 und R=2.59 erreicht.

Tabelle 3: HCl 30% ; $NaClO_2$ 25 %; t=23s; V=27 ml

| R | Ausbeute |
|---|---|
| [-] | [%] |
| 0.85 | 10.7 |
| 1.09 | 61.6 |
| 1.51 | 86.8 |
| 2.11 | 100.0 |
| 2.59 | 100.0 |
| 4.03 | 92.9 |
| 4.28 | 89.0 |

Der Vergleich der in Beispiel 1 und 2 erzielten Umsätze lehrt, dass mit Verstärkung der Salzsäure-Konzentration der Umsatz des Chlordioxids steigt (Umsätze in Beispiel 1 besser als in Beispiel 2). Dies ist grundsätzlich nicht überraschend. Entscheidend ist, dass der Umsatz zwar mit steigendem Salzsäureüberschuss ansteigt, danach aber wieder abfällt bzw. erst später weiter langsam ansteigt. Das Umsatzmaximum liegt im beanspruchten Bereich des molaren Verhältnis von Salzsäure zu Natriumchlorit. Daraus lässt sich die technische Lehre ableiten, möglichst das erste Umsatzmaximum auszunutzen und die stärker konzentrierte Säure zu verwenden.
Der Vergleich der Beispiele 1 und 3 bestätigt ersteinmal wieder das Umsatzmaximum im beanspruchten Bereich. Überraschend ist, dass der Umsatz bei der auf 5 Sekunden verkürzten Verweilzeit kaum sinkt: Es werden auch in Beispiel 1 vollständige Umsätze erzielt. Die Reaktion ist also so schnell, dass sie nach etwa 5 Sekunden abgeschlossen ist und folglich kein weiterer Umsatz geschieht. In Beispiel 3 ist den Edukten mithin eine viel zu große Verweilzeit eingeräumt worden. Diese Erkenntnis lässt sich technisch dadurch nutzen, dass das Reaktorvolumen V bei gleichbleibenden Volumenstrom V'=$V_{HCL}$+$V_{NaClO2}$ reduziert wird; vgl. Gleichung 8. Der Reaktor wird damit kleiner und kostengünstiger, erzielt aber fast dieselbe Umsatzleistung, wie Beispiel 1 belegt.
Die Ergebnisse der drei Versuchsreihen sind in dem Diagramm in Figur 4 aufgetragen. Zwischenwerte interpoliert. Bei allen Kurven ist deutlich ein Umsatzmaximum zu erkennen, welches im erfindungsgemäß beanspruchten Bereich von 2.14 bis 4.2, bevorzugt zwischen 2.19 und 3.6 ganz besonders bevorzugt zwischen 2.4 und 3.4 liegt. Hier liegt der Umsatz über 90 %, bevorzugt über 93 % und ganz besonders bevorzugt über 96 %.

**Bezugszeichenliste**

| | |
|---|---|
| 1 | Natriumchloritlagertank |
| 2 | Salzsäurelagertank |
| 3 | Förderpumpe Natriumchlorit |
| 4 | Förderpumpe Salzsäure |
| 5 | Reaktor (Reaktionsraum) |
| 6 | Bassin |
| 7 | zu behandelndes Wasser |
| 8 | Reaktorauslass |
| 9 | Wasserstrahl-Flüssigkeitspumpe |
| 10 | Umwälzpumpe für zu behandeldes Wasser |
| 11 | Verwendungsort |
| 12 | Rückführleitung |
| 13 | Rohrleitung in Figur 2 |

**Patentansprüche**

1. Verfahren zur Herstellung von Chlordioxid ($ClO_2$) aus Salzsäure (HCl) und Natriumchlorit ($NaClO_2$) in Gegenwart von Wasser ($H_2O$),
   **dadurch gekennzeichnet,**

   a) **dass** die Salzsäure in wässriger Lösung mit einer Konzentration von 27 bis 33 Gew% eingesetzt wird;
   b) **dass** das Natriumchlorit in wässriger Lösung mit einer Konzentration von 22 bis 27 Gew% eingesetzt wird;
   c) **dass** das molare Verhältnis von eingesetzter Salzsäure zu eingesetztem Natriumchlorit zwischen 2.14 und 4.2 liegt;
   d) und **dass** die Verweilzeit der Edukte im Reaktor weniger als 6 Sekunden, insbesondere 5 Sekunden beträgt.

2. Verfahren nach Anspruch 1,
   **dadurch gekennzeichnet,**

   a) **dass** die Salzsäure in wässriger Lösung mit einer Konzentration von 30 Gew% eingesetzt wird; und/oder
   b) **dass** das Natriumchlorit in wässriger Lösung mit einer Konzentration von 25 Gew% eingesetzt wird.

3. Verfahren nach Anspruch 1 oder 2,
   **dadurch gekennzeichnet,**
   **dass** das molare Verhältnis von eingesetzter Salzsäure zu eingesetztem Natriumchlorit zwischen 2.19 und 3.6 liegt, insbesondere, dass es zwischen 2.4 und 3.4 liegt.

4. Verfahren nach Anspruch 3,
   **dadurch gekennzeichnet,**
   **dass** das molare Verhältnis von eingesetzter Salzsäure zu eingesetztem Natriumchlorit 2.64 beträgt.

5. Verfahren nach einem der vorhergehenden Ansprüche durchgeführt in einem Reaktor,
   **dadurch gekennzeichnet,**
   **dass** der Reaktor von Wasser umgeben ist.

6. Verfahren nach Anspruch 5,
   **dadurch gekennzeichnet,**
   **dass** das aus dem Reaktor austretende, in wässriger Lösung vorliegende Chlordioxid mit Wasser verdünnt und sodann mit dem den Reaktor umgebenden Wasser vermischt wird.

7. Verfahren zur Behandlung von Wasser (H$_2$O) mit Chlordioxid (ClO$_2$) umfassend die folgenden Schritte:

a) Bereitstellen von zu behandelndem Wasser;
b) Bereitstellen eines Reaktors;
c) Eintauchen des Reaktors in das zu behandelnde Wasser;
d) Bereitstellen von Salzsäure (HCl) in wässriger Lösung außerhalb des zu behandelnden Wassers;
e) Bereitstellen von Natriumchlorit (NaClO$_2$) in wässriger Lösung außerhalb des zu behandelnden Wassers;
f) Fördern der wässrigen Salzsäure und des wässrigen Natriumchlorits in den Reaktor;
g) Reagieren der wässrigen Salzsäure und des wässrigen Natriumchlorits in dem Reaktor zu Chlordioxid (ClO$_2$) in wässriger Lösung;
h) Vermischen des wässrigen Chlordioxids mit dem zu behandelnden Wasser;

**dadurch gekennzeichnet**,

i) dass die Salzsäure in wässriger Lösung mit einer Konzentration von 27 bis 33 Gew% bereitgestellt wird;
k) dass das Natriumchlorit in wässriger Lösung mit einer Konzentration von 22 bis 27 Gew% bereitgestellt wird;
l) dass das molare Verhältnis von eingesetzter Salzsäure zu eingesetztem Natriumchlorit zwischen 2.14 und 4.2 liegt;
m) und dass die Verweilzeit der Edukte im Reaktor weniger als 6 Sekunden, insbesondere 5 Sekunden beträgt.

8. Verfahren nach Anspruch 7,
**dadurch gekennzeichnet,**

a) **dass** die Salzsäure in wässriger Lösung mit einer Konzentration von 30 Gew% eingesetzt wird;

und/oder

b) dass das Natriumchlorit in wässriger Lösung mit einer Konzentration von 25 Gew% eingesetzt wird.

9. Verfahren nach Anspruch 8,
**dadurch gekennzeichnet,**
**dass** das molare Verhältnis von eingesetzter Salzsäure zu eingesetztem Natriumchlorit zwischen 2.19 und 3.6 liegt, insbesondere, dass es zwischen 2.4 und 3.4 liegt.

10. Verfahren nach Anspruch 9,
**dadurch gekennzeichnet,**
**dass** das molare Verhältnis von eingesetzter Salzsäure zu eingesetztem Natriumchlorit 2.64 beträgt.


**Claims**

1. Method of preparing chlorine dioxide (ClO2) from hydrochloric acid (HCl) and sodium chlorite (NaClO2) in the presence of water (H2O),
**characterized in that**

a) the hydrochloric acid is used in aqueous solution at a concentration of 27 to 33 wt%;
b) the sodium chlorite is used in aqueous solution at a concentration of 22 to 27 wt%;
c) the molar ratio of hydrochloric acid used to sodium chlorite used is between 2.14 and 4.2;
d) and the reactor residence time of reactants is less than 6 seconds, especially 5 seconds.

2. Method according to Claim 1,
**characterized in that**

a) the hydrochloric acid is used in aqueous solution at a concentration of 30 wt%;

and/or

b) the sodium chlorite is used in aqueous solution at a concentration of 25 wt%.

3. Method according to Claim 1 or 2,
   **characterized in that**
   the molar ratio of hydrochloric acid used to sodium chlorite used is between 2.19 and 3.6 and especially between 2.4 and 3.4.

4. Method according to Claim 3,
   **characterized in that**
   the molar ratio of hydrochloric acid used to sodium chlorite used is 2.64.

5. Method according to any preceding claim conducted in a reactor,
   **characterized in that**
   the reactor is surrounded by water.

6. Method according to Claim 5,
   **characterized in that**
   the chlorine dioxide emerging from the reactor in aqueous solution is diluted with water and then mixed with the water surrounding the reactor.

7. Method of treating water ($H_2O$) with chlorine dioxide ($ClO_2$) comprising the steps of:

   a) providing water to be treated;
   b) providing a reactor;
   c) immersing the reactor in the water to be treated;
   d) providing hydrochloric acid (HCl) in aqueous solution outside the water to be treated;
   e) providing sodium chlorite ($NaClO_2$) in aqueous solution outside the water to be treated;
   f) conveying the aqueous hydrochloric acid and the aqueous sodium chlorite into the reactor;
   g) reacting the aqueous hydrochloric acid and the aqueous sodium chlorite in the reactor to form chlorine dioxide ($ClO_2$) in aqueous solution;
   h) mixing the aqueous chlorine dioxide with the water to be treated;

   **characterized in that**

   i) the hydrochloric acid is provided in aqueous solution at a concentration of 27 to 33 wt%;
   k) the sodium chlorite is provided in aqueous solution at a concentration of 22 to 27 wt%;
   1) the molar ratio of hydrochloric acid used to sodium chlorite used is between 2.14 and 4.2;
   m) and the reactor residence time of reactants is less than 6 seconds, especially 5 seconds.

8. Method according to Claim 7,
   **characterized in that**

   a) the hydrochloric acid is used in aqueous solution at a concentration of 30 wt%;

   and/or

   b) the sodium chlorite is used in aqueous solution at a concentration of 25 wt%.

9. Method according to Claim 8,
   **characterized in that**
   the molar ratio of hydrochloric acid used to sodium chlorite used is between 2.19 and 3.6 and especially between 2.4 and 3.4.

10. Method according to Claim 9,
    **characterized in that**
    the molar ratio of hydrochloric acid used to sodium chlorite used is 2.64.

**Revendications**

1. Procédé pour la préparation de dioxyde de chlore ($ClO_2$) à partir d'acide chlorhydrique (HCl) et de chlorite de sodium ($NaClO_2$) en présente d'eau ($H_2O$), **caractérisé en ce que**

   a) on utilise l'acide chlorhydrique en solution aqueuse à une concentration de 27 à 33 % en poids ;
   b) on utilise le chlorite de sodium en solution aqueuse à une concentration de 22 à 27 % en poids ;
   c) le rapport molaire de l'acide chlorhydrique utilisé au chlorite de sodium utilisé est compris entre 2,14 et 4,2 ;
   d) et le temps de séjour des produits de départ dans le réacteur est inférieur à 6 secondes, en particulier 5 secondes.

2. Procédé selon la revendication 1,
   **caractérisé en ce que**

   a) on utilise l'acide chlorhydrique en solution aqueuse à une concentration de 30 % en poids ;

   et/ou

   b) on utilise le chlorite de sodium en solution aqueuse à une concentration de 25 % en poids.

3. Procédé selon la revendication 1 ou 2,
   **caractérisé en ce que**
   le rapport molaire de l'acide chlorhydrique utilisé au chlorite de sodium utilisé est compris entre 2,19 et 3,6, en particulier **en ce qu'**il est compris entre 2,4 et 3, 4.

4. Procédé selon la revendication 3,
   **caractérisé en ce que**
   le rapport molaire de l'acide chlorhydrique utilisé au chlorite de sodium utilisé est de 2,64.

5. Procédé selon l'une quelconque des revendications précédentes, effectué dans un réacteur, **caractérisé en ce que** le réacteur est entouré d'eau.

6. Procédé selon la revendication 5,
   **caractérisé en ce que** le dioxyde de chlore présent en solution aqueuse, sortant du réacteur, est dilué avec de l'eau et ensuite mélangé avec l'eau entourant le réacteur.

7. Procédé pour le traitement de l'eau ($H_2O$) par du dioxyde de chlore ($ClO_2$), comprenant les étapes suivantes :

   a) disposition d'eau à traiter ;
   b) disposition d'un réacteur ;
   c) immersion du réacteur dans l'eau à traiter ;
   d) disposition d'acide chlorhydrique (HCl) en solution aqueuse à l'extérieur de l'eau à traiter ;
   e) disposition de chlorite de sodium ($NaClO_2$) en solution aqueuse à l'extérieur de l'eau à traiter ;
   f) amenée de l'acide chlorhydrique aqueux et du chlorite de sodium aqueux dans le réacteur ;
   g) réaction de l'acide chlorhydrique aqueux et du chlorite de sodium aqueux dans le réacteur conduisant au dioxyde de chlore ($ClO_2$) en solution aqueuse ;
   h) mélange du dioxyde de chlore aqueux avec l'eau à traiter ;

   **caractérisé en ce que**

   i) l'acide chlorhydrique est disposé en solution aqueuse à une concentration de 27 à 33 % en poids ;
   k) le chlorite de sodium est disposé en solution aqueuse à une concentration de 22 à 27 % en poids ;
   1) le rapport molaire de l'acide chlorhydrique utilisé au chlorite de sodium utilisé est compris entre 2,14 et 4,2 ;
   m) et le temps de séjour des produits de départ dans le réacteur est inférieur à 6 secondes, en particulier 5 secondes.

8. Procédé selon la revendication 7,
   **caractérisé en ce que**

a) on utilise l'acide chlorhydrique en solution aqueuse à une concentration de 30 % en poids ;
et/ou
b) on utilise le chlorite de sodium en solution aqueuse à une concentration de 25 % en poids.

9. Procédé selon la revendication 8,
**caractérisé en ce que**
le rapport molaire de l'acide chlorhydrique utilisé au chlorite de sodium utilisé est compris entre 2,19 et 3,6, en particulier **en ce qu'**il est compris entre 2,4 et 3, 4.

10. Procédé selon la revendication 9,
**caractérisé en ce que**
le rapport molaire de l'acide chlorhydrique utilisé au chlorite de sodium utilisé est de 2,64.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009077309 A1
- WO 2009077160 A1
- DE 202004005755 U1
- US 20050244328 A1
- DE 102010027840
- DE 102010027908

**In der Beschreibung aufgeführte Nicht-Patentliteratur**

- **NOWOSIELSKI, MAREK.** On-Site Chlorine dioxide: A Review of Uses, Safety and New Processes. *Official Proceedings - 65th International Water Conference,* 2004, 213-225